# EUROPEAN PATENT SPECIFICATION

(11) **EP 4 112 342 B1**
(45) Date of publication and mention of the grant of the patent: **24.01.2024**
(21) Application number: 22181485.8
(22) Date of filing: 28.06.2022
(51) Int. Cl.: B60H 1/00, B60H 1/32

(54) **AIR CONDITIONING DEVICE**
KLIMAGERÄT
DISPOSITIF DE CONDITIONNEMENT D'AIR

(30) Priority: 29.06.2021 IT 202100017069
(43) Date of publication of application: 04.01.2023
(73) Proprietor: Tesio Cooling Systems S.p.A., 10024 Moncalieri (TO) (IT)
(72) Inventor: EVANGELISTA, Luca, 10024 MONCALIERI (TO) (IT)
(74) Representative: Studio Torta S.p.A.

(56) References cited:
- DE-A1- 19 645 776
- DE-A1-102007 023 249
- FR-A1- 2 274 465

## Description

### CROSS-REFERENCE TO RELATED APPLICATIONS

This invention claims priority from Italian Patent Application No. 102021000017069 filed on June 29, 2021.

### TECHNICAL SECTOR

The present invention relates to an air conditioning device for conditioning the air present in an inner environment of a means of transport.

In particular, the present invention is advantageously but not exclusively applied for conditioning a passenger compartment of a vehicle or a commercial transport means or work vehicle, to which the present description will refer without losing its generality.

### BACKGROUND ART

Devices for conditioning the air in the passenger compartment of a means of transport, e.g. of a motor vehicle, are known.

Generally, such devices comprise a fluidic circuit configured to circulate an operative fluid, e.g. Freon^{®} or similar, and known conditioning means cooperating with the fluidic circuit to condition the operative fluid and, through this, cool the air in the passenger compartment.

In some known configurations, a typical conditioning device also comprises a radiator mass (commonly known as a "heater") configured to receive an operative fluid other than the one mentioned above, e.g. water heated by the vehicle engine, and defining a heat exchange interface between the operative fluid received and the air, in order to heat the passenger compartment.

In some known configurations, a typical conditioning device also comprises forced ventilation means, e.g. an electric fan, configured to convey and direct an air flow to be conditioned (cooled or heated) towards the conditioning means and the radiator mass.

Suitably, depending on the environment conditions (summer or winter) or depending on the temperature at which the air in the passenger compartment is to be conditioned, the conditioning means and radiator mass can be selectively switched on and off, depending on whether the air in the passenger compartment is to be heated or cooled.

The combination of the above-mentioned components thus defines a known HVAC device.

Examples of known air conditioning devices for conditioning the air present in an inner environment of a means of transport, are disclosed in DE-A-102007023249, FR-A-2274465 and DE-A-19645776.

HVAC devices of the aforementioned type generally comprise a single casing within which all the components described above are housed, so that a compact, integrated HVAC unit is defined.

Furthermore, the conditioning means typically comprise an evaporator and a condenser, the operation of which is known in itself and defining (together with other typical components arranged within the fluidic circuit such as a compressor, an expansion valve, a dryer, an accumulator, etc.) a refrigerant circuit for air conditioning.

The Applicant noted that integrated conditioning devices of the type described above are susceptible to further improvement, in particular regarding their operative flexibility and their adaptability to different operative conditions and, more specifically, to different construction requirements.

It is also known in the field the formation of condensation within the evaporator, due to the temperature difference between the evaporator and the air flow to be conditioned that laps it. Such temperature difference causes the moisture present within the air stream to be condensed.

According to the foregoing, the Applicant also noted that integrated conditioning devices of the known type are also susceptible to further improvement also with regard to the management of the condensation produced, in use, by conditioning means, in particular in the light of the adaptability of the devices to different operative conditions and construction requirements.

### OBJECT AND SUMMARY OF THE INVENTION

Aim of the present invention is to realise an air conditioning device for conditioning the air present in an inner environment of a means of transport, which is of high reliability and cheap, and enables to fulfil at least some of the requirements specified above and related to the conditioning devices of the known type.

According to the invention, this aim is reached by an air conditioning device for conditioning the air present in an inner environment of a means of transport, as claimed in the appended independent claim 1. Preferred embodiments of the present invention are laid down in the appended dependent claims.

### BRIEF DESCRIPTION OF THE DRAWINGS

For a better understanding of the present invention, some preferred non-limiting embodiments are described below, purely by way of example and with the aid of the attached drawings, in which:
- Figure 1 is a perspective view, with parts removed for clarity, of an air conditioning device made according to the present invention and according to a first operative configuration;
- Figure 2 is an exploded schematic side view, with parts removed for clarity, of the conditioning device of Figure 1;
- Figure 3 is a perspective view, with parts removed for clarity, of the air conditioning device in a second operative configuration;
- Figure 4 is an exploded schematic side view, with parts removed for clarity, of the conditioning device of Figure 3;
- Figure 5 is a perspective view, with parts removed for clarity, of the air conditioning device according to a third operative configuration; and
- Figure 6 is an exploded schematic side view, with parts removed for clarity, of the conditioning device of Figure 5.

### DETAILED DESCRIPTION

With reference to the attached figures, a device for conditioning the air present in an inner room 2 of a means of transport (not illustrated) is referred to as a whole with 1.

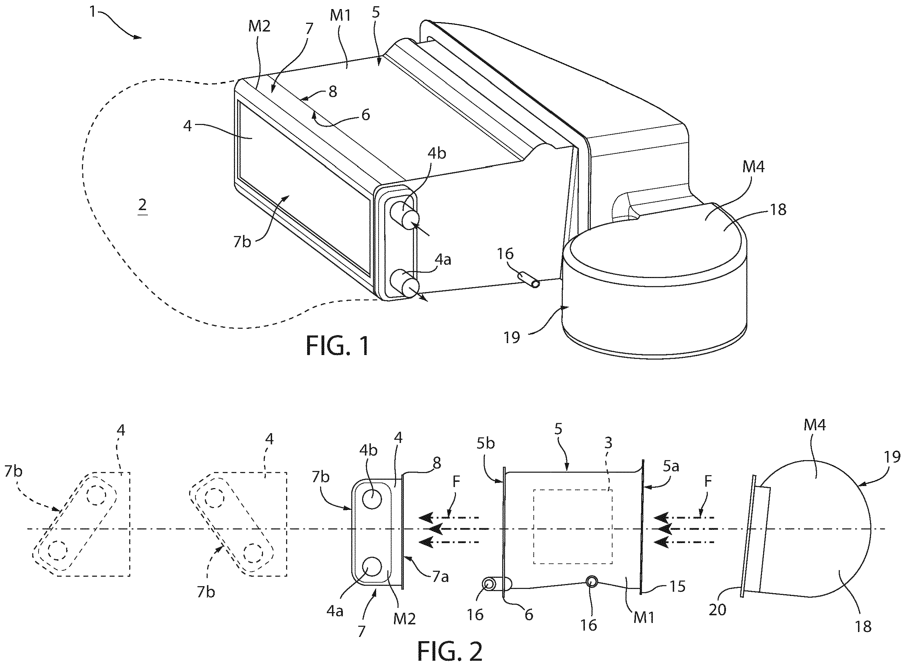

In particular, the present invention is advantageously but not exclusively applied for conditioning a passenger compartment 2 (partially and schematically illustrated in Figure 1) of a motor vehicle or a commercial transport means or work vehicle, to which the present description will refer without losing generality.

The device 1 comprises:
- a fluidic circuit (known in itself and not illustrated) configured to circulate a first operative fluid, e.g. Freon^{®} or similar;
- air conditioning means 3 (known in itself and illustrated only schematically in the attached figures) cooperating, in use, with the fluidic circuit to condition the first operative fluid and, through it, the air present in the passenger compartment 2; and
- a radiator mass 4 configured to receive a second operative fluid, preferably water heated by the engine or other equipment of the means of transport, and defining a heat exchange interface between the second operative fluid received and the air that laps/crosses, in use, the radiator mass 4.

In detail, the conditioning means 3 comprise a condenser, an evaporator, a dryer, an accumulator and, preferably, other components such as a compressor, an expansion valve, etc. (not illustrated), the operation of which is known in itself and is not herein disclosed.

In greater detail, the aforementioned components define, together with the fluidic circuit, a refrigeration circuit for conditioning (cooling) the air present in the passenger compartment 2.

Preferably, the radiator mass 4 comprises a set of heat exchange fins (known and not illustrated) defining the aforementioned interface and receiving, in a known and not detailed manner, the second operative fluid, preferably heated water. In particular, the radiator mass 4 comprises an inlet 4b for the second operative fluid and an outlet 4a for the second operative fluid that has exchanged heat. In use, the fins are lapped/crossed by the air in order to release the heat carried by the second operative fluid and thus heat the passenger compartment 2.

In view of the foregoing, the conditioning means 3 are configured to cool the air present in passenger compartment 2 and the radiator mass 4 is configured to heat the air present in passenger compartment 2.

Conveniently, the conditioning means 3 and the radiator mass 4 are selectively switchable on and off to heat or cool the air in the passenger compartment 2, depending on certain ambient conditions (summer or winter) or depending on the desired temperature inside the passenger compartment 2.

In other words, when the conditioning means 3 is on, radiator mass 4 is off, and vice versa.

Alternatively, the conditioning means 3 and the radiator mass 4 may be activated simultaneously for conditioning in a combined way the air of the passenger compartment 2.

According to a first aspect of the present invention, the device 1 is of the modular type and the conditioning means 3 and the radiator mass 4 are housed in respective, separate casings 5, 7 which can be connected in a releasable manner directly to each other or with interposition of parts.

In particular, the device 1 comprises:
- a first casing 5 housing the conditioning means 3, defining a first module M1 of the device 1, having a first inlet opening 5a for the air to be conditioned (preferably to be cooled) and a first outlet opening 5b for the conditioned air (preferably cooled), preferably arranged on opposite sides of the first casing 5 itself, and including a first connection interface 6 arranged at the first outlet opening 5b; and
- a second casing 7 housing the radiator mass 4, defining a second module M2 of the device 1, having a second inlet opening 7a for the air (to be heated) and a second outlet opening 7b for the (heated) air, preferably arranged on opposite sides of the second casing 7 itself, and including a second connection interface 8 arranged at the second inlet opening 7a.

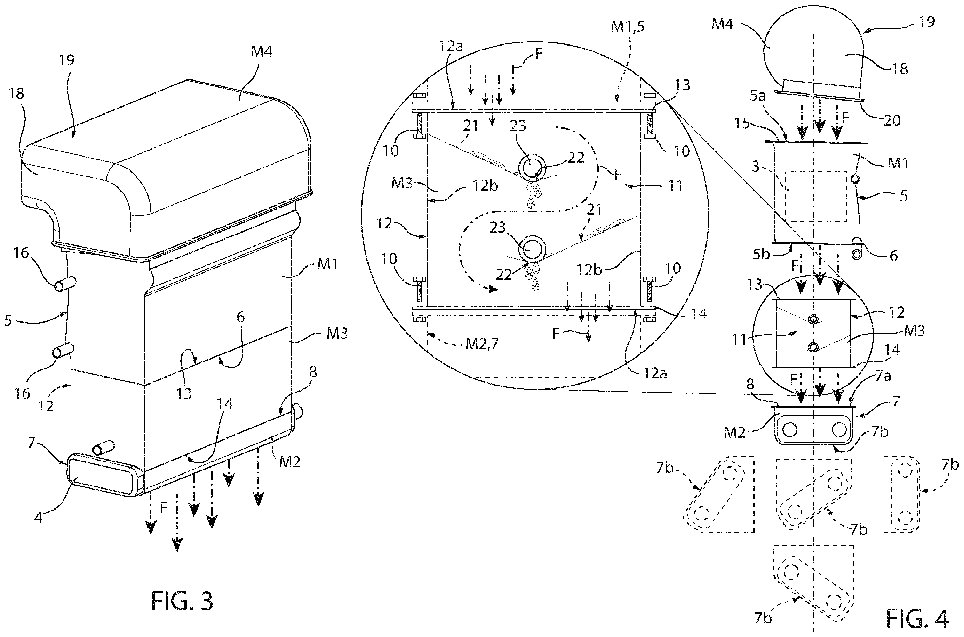

According to the invention, the first interface 6 may be coupled to the second interface 8 by means of releasable fastening means 10, either directly or with the interposition of parts (illustrated in Figure 4).

In the non-limiting example described and illustrated herein, the first connection interface is defined by a connection flange 6 carried by the first casing 5 at the first outlet opening 5b, and the second connection interface is defined by a connection flange 8 carried by the second casing 7 at the second inlet opening 7a.

Preferably, the fastening means 10 are defined by threaded members, such as screws and bolts, rivets, clamps, or the like, configured to determine the releasable coupling of the flange 6 with the flange 8 and, therefore, of the first module M1 with the second module M2.

Therefore, thanks to the configuration described above, the first casing 5 and the second casing 7, i.e. the first module M1 and the second module M2 are connected in series and in a releasable manner, so that they can be coupled together directly or with interposition of parts.

In other words, the radiator mass 4 may be releasably coupled in series with the conditioning means 3, so that it can be coupled with it directly or with the interposition of parts.

Preferably, the radiator mass 4 may be selected from a plurality of configurations (illustrated in a dotted line in Figures 2, 4 and 6) or types that differ from each other only with regard to the arrangement of outlet opening 7b.

More precisely, the various selectable configurations of radiator mass 4 differ from each other in the angle of the outlet opening 7b, as illustrated in the above figures.

Thus, thanks to the modularity of the device 1, the modules M1 and M2 may be releasably coupled directly to each other or with interposition of parts, and, in addition, an appropriate radiator mass 4 may be selected depending on the desired angle of the outlet opening 7b, without having to replace and redesign the entire device 1.

Appropriately, the first casing 5 further houses the fluidic circuit.

As is well known in the field, condensation is not unlikely to form, in use, inside the evaporator of the conditioning means 3, mainly due to the temperature difference between the evaporator and the air to be conditioned lapping it. Such temperature difference causes the condensation of the moisture housed in the air to be conditioned.

In order to evacuate the condensation produced, the device 1 comprises condensation collection means 11 fluidically connectable to the conditioning means 3 to receive the condensation produced, in use, by the latter, or rather by the aforementioned evaporator.

According to an important aspect of the present invention, the device 1 is selectively available in:
- a position horizontal (Figures 1 and 2) with respect to a platform of the means of transport parallel to the ground on which the means of transport advances, in use; and in
- a position inclined (Figures 3 to 6) with respect to said horizontal position, in particular a vertical position with respect to said platform.

In particular, the platform could be defined by the platform of the wheels (or rails) of the means of transport).

More specifically, the aforesaid positions are horizontal and inclined (vertical) relative to the force of gravity, when the means of transport advances on a level surface.

According to a further aspect of the present invention, the device 1 comprises a third casing 12 housing the means 11 for collecting the condensation produced, in use, by the conditioning means 3, defining a third module M3 of the device 1 and configured to be crossed by an air flow F in forced ventilation.

Still according to such aspect of the invention, the third casing 12 is interposed between the first casing 5 and the second casing 7 when the device 1 is placed, in use, in said inclined position, in particular in a vertical position, and the aforesaid air flow F is directed, in forced ventilation, downwards relative to a horizontal direction with respect to the aforesaid plane (Figures 3 and 4) .

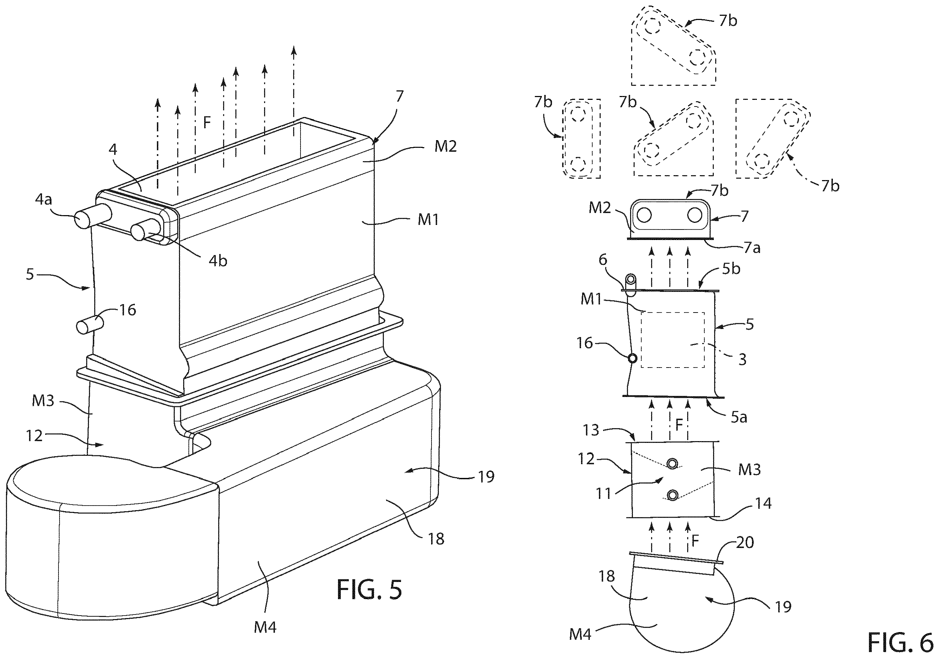

Still according to such aspect of the invention, the third casing 12 is arranged upstream of the first inlet opening 5a, relative to the direction of the air flow F, when the device 1 is placed, in use, in said inclined position relative to the horizontal direction, in particular in a vertical position, and the air flow F is directed, in forced ventilation, upwards relative to said horizontal direction (Figures 5 and 6).

Conveniently, the third casing 12 has two openings 12a for the passage of the air flow arranged at opposite walls of the third casing 12 transverse to the direction of the air flow. In addition, the third casing 12 comprises a third connection interface 13 and a fourth connection interface 14 each one arranged at one of the openings 12a.

Preferably, the third interface 13 and the fourth interface 14 are also defined by respective connection flanges.

As visible in Figure 4, in the case of the inclined arrangement with a downward-directed air flow F, the third interface 13 is releasably coupled to the first interface 6 and the fourth interface 14 is releasably coupled to the second interface 8, e.g. by means of the aforementioned releasable fastening means 10.

Thereby, the third casing 12 is interposed between the first casing 5 and the second casing 7. Thus, in such a configuration, the first casing 5 and the second casing 7 are connected to each other in a releasable manner by interposition of parts, where these parts are defined by the third casing 12 and by the collection means 11.

By contrast, as visible in Figure 6, in the case of the inclined arrangement with upwardly-directed air flow F, the third interface 13 is releasably coupled with a fifth interface 15 of the first casing 5 arranged at the inlet opening 5a, while the fourth interface 14 is free or releasably couplable to a component described below for receiving the air flow F in forced ventilation.

Thereby, the third casing 12 is placed upstream of the inlet opening 5a.

In view of the foregoing, depending on the orientation of the air flow F, and thanks to the modularity of the device 1, it is possible to arrange the third casing 12, and therefore the collection means 11, in the optimal position for collecting the condensation produced, within the first casing 5 by the conditioning means 3 and thus avoid such condensation from escaping from the outlet opening 7b (in the case of the inclined arrangement with air flow F directed downwards) or from the inlet opening 5a (in the case of the inclined arrangement with the air flow F directed upwards). In fact, in such inclined and non-horizontal arrangements, the condensation produced tends to fall downwards under the action of gravity and, therefore, to drip out of the first casing 5 downwards. Thanks to the modularity of the device 1, it is therefore sufficient to reorganise the positioning of modules M1, M2, and M3, and thus of casings 5, 7 and 12, to achieve the aforementioned effect, without having to redesign or reconfigure the entire conditioning device 1. This implies undoubted advantages in terms of economy, flexibility and adaptability of the device 1.

Advantageously, when the device 1 is arranged in said horizontal position, the first casing 5 is connected to the second casing 7 directly without interposition of parts by releasable coupling of the flange 6 (i.e. the first interface) with the flange 8 (i.e. the second interface). This operative condition is illustrated in Figures 1 and 2.

Therefore, in such a configuration, the third casing 12 and, therefore, the third module M3 is not provided.

Suitably, the first casing 5 comprises ducts 16 arranged at one of the walls constituting the first casing 5, in particular the lower wall when it is arranged in a horizontal position, and placing the interior of the first casing 5 in fluidic communication with the outside, in order to collect the condensation produced by the conditioning means 3 and discharge it outside the first casing 5.

In detail, in this specific operative condition in which the device 1 is placed in a horizontal position, the ducts 16 receive, by gravity, the condensation produced by the conditioning means 3 and convey it outside the first casing 5.

Once again, thanks to its modularity, the device 1 is highly flexible and adaptable to construction and project requirements. In this case, it is in fact possible to omit the third casing 12 or third module M3 without having to redesign the entire device 1.

Thus, thanks to the modularity of the device 1, it is possible to appropriately recombine the modules M1, M2, M3 constituting the device 1 itself according to the different operative and construction requirements, which most often depend on the spatial configuration of the means of transport on which the device 1 is to be installed.

As shown in Figures 2, 4 and 6, the first casing 5 has the aforementioned fifth connection interface 15 arranged at the inlet opening 5a.

Preferably, the fifth interface 15 is defined by a connection flange of the type described above.

Conveniently, the device 1 comprises:
- forced ventilation means 18, for example an electric fan, configured to convey and direct the aforesaid air flow F towards the inlet opening 5a and, through the first casing 5, towards the outlet opening 5b and, then, towards the inlet opening 7a of the second casing; and
- a fourth casing 19 housing the forced ventilation means 18, defining a fourth module M4 of the device 1 and having a sixth connection interface 20 (also preferably defined by a connection flange of the type described above).

According to one aspect of the present invention, the fifth interface 15 may be coupled to the sixth interface 20 by means of the aforementioned releasable fastening means 10, either directly or by interposition of parts.

In particular, the fourth casing 19, i.e. the fourth module M4 is suitably arranged upstream of every other casing or module of the device 1, so as to direct the air flow F towards all the existing casings and modules, so that the air flow F passes through them in succession.

As visible in Figure 4, in the case of the inclined arrangement with downward-directed air flow F, the fourth casing 19 is coupled in a releasable manner directly to the first casing 5, i.e. the sixth interface 20 is coupled in a releasable manner directly to the fifth interface 15, e.g. by means of the fastening means 10, and thus without interposition of parts.

As visible in Figure 2, even in the case of the horizontal arrangement, the fourth casing 19 is coupled in a releasable manner directly to the first casing 5, and thus without interposition of parts.

In contrast, as visible in Figure 6, in the case of the inclined arrangement with upward-directed air flow F, the fourth casing 19 is releasably coupled to the third casing 12, i.e. the sixth interface 20 is coupled directly to the fourth interface 14, e.g. by means of fastening means 10. Therefore, in this case the sixth interface 20 (the fourth casing 19) is coupled to the fifth interface 15 (the first casing 5) with interposition of parts, these parts being defined by the third casing 12.

In this case also, thanks to the modularity of the device 1, the modules M1, M2, M3 and M4 of the device can be rearranged according to operative and construction requirements.

Advantageously, the collection means 11 comprise at least two inclined surfaces 21 for collecting the condensation produced, in use, by the conditioning means 3, the collection surfaces 21 extending cantilevered from opposite inner walls 12b of the third casing 12 towards the interior of the third casing 12 itself.

In detail, each collection surface is defined by a chute 21 configured to receive (in particular by gravity) the moisture within the air flow F condensed by the conditioning means 3, and extending cantilevered from the corresponding inner wall 12b towards the opposite inner wall 12b.

In greater detail, the inner walls 12b are contiguous with the walls on which the openings 12a are obtained. In practice, the inner walls 12b are essentially parallel to the advancement direction of the air flow F within the third casing 12.

According to one aspect of the invention, the chutes 21, i.e. the collection surfaces, are arranged staggered within the third casing 12 in such a way that the air flow F performs an S-shaped path therein.

More precisely, the chutes 21 are staggered with respect to the forward direction of the air flow F within the third casing 12.

In addition, each chute 21 has, at its free end, a basin 22 for collecting the condensed moisture fluidically connectable to a relative outlet duct 23 configured to convey the condensed moisture out of the third casing 12.

In the light of the foregoing, an upper chute 21 and a lower chute 21 may be identified, relative to the direction of the force of gravity.

Thanks to this configuration, effective collection of condensation is ensured at essentially any inclination of the device 1, e.g. in an arrangement thereof inclined at 30° with respect to the vertical direction (relative to the force of gravity). In fact, the presence of the two chutes 21 arranged staggered and extending at opposite walls 12b ensures the complete collection of condensed moisture by the upper chute 21 and, when the device 1 is arranged inclined beyond a certain angle, by the lower chute 21.

Advantageously, the fourth module M4, i.e. the forced ventilation means 18, is selectable from a plurality of types differing from each other and having the same sixth interface 20 that can be selectively coupled to the fifth interface 15, either directly or with interposition of parts, as described above.

After examining the characteristics of the device 1 made according to the present invention, the advantages it allows to obtain are clear.

In particular, thanks to the modularity of the device 1, the modules M1 and M2 may be releasably coupled directly to each other or with interposition of parts, and, in addition, an appropriate radiator mass 4 may be selected depending on the desired angle of the outlet opening 7b, without having to replace and redesign the entire device 1.

Furthermore, thanks to the modularity of the device 1, it is possible to arrange the third casing 12, and therefore the collection means 11, in the optimal position for collecting the condensation produced, within the first casing 5, by the conditioning means 3 and thus to avoid the leakage of this condensation from the outlet opening 7b (in the case of the inclined arrangement with air flow F directed downwards) or from the inlet opening 5a (in the case of the inclined arrangement with an air flow F directed upwards).

In addition, thanks to the modularity of the device 1, the modules M1, M2, M3 and M4 of the device may be rearranged according to operative and construction requirements.

In the light of the foregoing, thanks to the modularity of the device 1, it is therefore possible to appropriately recombine the modules M1, M2, M3 constituting the device 1 itself according to the different operative and construction requirements, which most often depend on the spatial configuration of the means of transport on which device 1 is to be installed.

Thus, the device 1 defines an HVAC unit of the modular type, i.e. an HVAC unit not defined by a single compact and integrated casing housing all the components organised in a static and unchangeable configuration except by means of a redesign, rearrangement, reorganisation or non-immediate reassembly of the parts, as is possible in the case of the device 1 made according to the present invention.

Finally, thanks to the presence and special arrangement and configuration of the chutes 21 of the collection means 11, effective collection of the condensation is ensured in essentially any inclination of the device 1.

It is clear that the device 1 described and shown herein may be subject to modifications and variations without departing from the scope of protection defined by the claims.

In particular, collection means 11 of the type described above, i.e. including chutes 21 arranged staggered and extending cantilevered from opposite walls, could be implemented in an integrated conditioning device of the non-modular type, which does not belong to the present invention, that needs to be arranged at an angle to the vertical direction in order to effectively collect the condensation produced.

In other words, collection means 11 of the type described above, i.e. comprising the aforesaid chutes 21 could be implemented in an air conditioning device, which does not belong to the present invention, merely comprising: the aforementioned fluidic circuit configured to circulate the operative fluid, the conditioning means 3, and the collection means 11 comprising a casing 12 configured to be crossed by the air flow and at least two inclined surfaces 21 for collecting the condensation produced, in use, by the conditioning means 3, the collection surfaces 21 extending cantilevered from opposing inner walls 12b of the casing 12 towards the interior of the casing 12, the collection surfaces (21) being arranged staggered within the casing 12 so that the air flow completes, therein, an S-shaped path. Preferably, each collection surface is defined by an aforesaid chute 21, which is configured to receive condensed moisture from the conditioning means 3, extends cantilevered from the relative inner wall 12b towards the opposite inner wall 12b and has, at its free end, a basin 22 for collecting condensed moisture fluidically connectable to a relative outlet duct 23 configured to convey the condensed moisture out of the casing 12.

## Claims

1. Air conditioning device (1) for conditioning the air present in an inner environment (2) of a means of transport, said device (1) comprising:
- a fluidic circuit configured to circulate a first operative fluid;
- conditioning means (3) cooperating, in use, with the circuit to condition the first operative fluid and, through this, the air present in the inner environment (2) of the means of transport; and
- a radiator mass (4) configured to receive a second operative fluid and defining a heat exchange interface between the second operative fluid received and the air that laps/crosses, in use, the radiator mass (4);
wherein the air conditioning device (1) is of modular type and the conditioning means (3) and the radiator mass (4) are housed in respective, separate casings (5, 7) connectable in a releasable manner to one another directly or with interposition of parts;
wherein the air conditioning device (1) comprises:
- a first casing (5) housing the conditioning means (3), defining a first module (M1) of the device (1), having a first inlet opening (5a) for the air to be conditioned and a first outlet opening (5b) for the conditioned air; and
- a second casing (7) housing the radiator mass (4), defining a second module (M2) of the device (1), having a second inlet opening (7a) for the air and a second outlet opening (7b) for the air;
**characterized in that** the first casing (5) includes a first connection interface (6) arranged at the first outlet opening (5b), **in that** the second casing (7) includes a second connection interface (8) arranged at the second inlet opening (7a), and **in that** said first connection interface (6) is couplable to said second connection interface (8) by means of releasable fastening means (10), directly or with interposition of parts.

2. Device (1) as claimed in claim 1, wherein the device (1) is selectively arrangeable in:
- a position horizontal with respect to a platform of the means of transport parallel to the ground on which the means of transport advances, in use; and in
- a position inclined with respect to said position horizontal, in particular a vertical position with respect to said platform.

3. Device (1) as claimed in claim 2, wherein, when the device (1) is arranged, in use, in said position horizontal with respect to said platform, the first casing (5) is connected to the second casing (7) directly without interposition of parts by releasable coupling of the first connection interface (6) with the second connection interface (8).

4. Device (1) as claimed in claim 2, and comprising a third casing (12) housing collection means (11) for collecting the condensation produced, in use, by the conditioning means (3), defining a third module (M3) of the device (1) and configured to be crossed by an air flow in forced ventilation;
and wherein the third casing (12) is interposed in coupling between the first casing (5) and the second casing (7) when the device (1) is arranged, in use, in said position inclined with respect to said position horizontal and the air flow is directed, in forced ventilation, downwards with respect to a direction horizontal relative to said platform.

5. Device (1) as claimed in claim 2, and comprising a third casing (12) housing collection means (11) for collecting the condensation produced, in use, by the conditioning means (3), defining a third module (M3) of the device (1) and configured to be crossed by an air flow in forced ventilation;
and wherein the third casing (12) is arranged upstream of the first inlet opening (5a), relative to the direction of the air flow, when the device (1) is arranged, in use, in said position inclined with respect to said position horizontal and the air flow is directed, in forced ventilation, upwards with respect to a direction horizontal relative to said platform.

6. Device (1) as claimed in claim 4 or 5, wherein said collection means (11) comprise at least two inclined collection surfaces (21) for collecting the condensation produced, in use, by the conditioning means (3), the collection surfaces (21) extending cantilevered from opposite inner walls (12b) of the third casing (12) towards the interior of the third casing (12) itself,
and wherein the collection surfaces (21) are arranged staggered inside the third casing (12) so that the air flow defines an S-shaped path therein.

7. Device (1) as claimed in claim 6, wherein each collection surface is defined by a chute (21) configured to receive condensed moisture from the conditioning means (3), projecting from the relative inner wall (12b) towards the opposite inner wall (12b) and having, at its free end, a basin (22) for collecting the condensed moisture fluidically connectable to a relative outlet duct (23) configured to convey the condensed moisture out of the third casing (12).

8. Device (1) as claimed in any one of claims 1 to 6, wherein the first casing (5) has a third connection interface (15) arranged at the first inlet opening (5a);
wherein the device (1) comprises:
- forced ventilation means (18) configured to convey and direct an air flow towards the first inlet opening (5a) and, through the first casing (5), towards the first outlet opening (5b) and, then, towards the second inlet opening (7a); and
- a fourth casing (19) housing the forced ventilation means (18), defining a fourth module (M4) of the device (1) and having a fourth connection interface (20);
said third connection interface (15) being couplable to said fourth connection interface (20) by means of releasable fastening means (10), directly or with interposition of parts.

## Patentansprüche

1. Klimatisierungsvorrichtung (1), um die in einer Innenumgebung (2) eines Transportmittels vorhandene Luft zu konditionieren, wobei die Vorrichtung (1) aufweist:
- einen Fluidkreislauf, der dafür konfiguriert ist, ein erstes Betriebsfluid zirkulieren zu lassen;
- ein Konditionierungsmittel (3), das im Einsatz mit dem Kreislauf zusammenarbeitet, um das erste Betriebsfluid und dadurch die in der Innenumgebung (2) des Transportmittels vorhandene Luft zu konditionieren; und
- eine Radiatormasse (4), die dafür konfiguriert ist, ein zweites Betriebsfluid aufzunehmen, und eine Wärmeaustauschschnittstelle zwischen dem aufgenommenen zweiten Betriebsfluid und der Luft, die im Einsatz die Radiatormasse (4) umspült/durchquert, definiert;
wobei die Klimatisierungsvorrichtung (1) vom modularen Typ ist und das Konditionierungsmittel (3) und die Radiatormasse (4) in jeweiligen separaten Gehäusen (5, 7) untergebracht sind, die in lösbarer Art und Weise direkt oder unter Zwischenschaltung von Teilen miteinander verbindbar sind;
wobei die Klimatisierungsvorrichtung (1) aufweist:
- ein erstes Gehäuse (5), das das Konditionierungsmittel (3) beherbergt, ein erstes Modul (M1) der Vorrichtung (1) definiert, eine erste Einlassöffnung (5a) für die zu konditionierende Luft und eine erste Auslassöffnung (5b) für die konditionierte Luft aufweist; und
- ein zweites Gehäuse (7), das die Radiatormasse (4) beherbergt, ein zweites Modul (M2) der Vorrichtung (1) definiert, eine zweite Einlassöffnung (7a) für die Luft und eine zweite Auslassöffnung (7b) für die Luft aufweist;
**dadurch gekennzeichnet, dass** das erste Gehäuse (5) eine erste Verbindungsschnittstelle (6) enthält, die an der ersten Auslassöffnung (5b) angeordnet ist, dass das zweite Gehäuse (7) eine zweite Verbindungsschnittstelle (8) enthält, die an der zweiten Einlassöffnung (7a) angeordnet ist, und dass die erste Verbindungsschnittstelle (6) mittels eines lösbaren Befestigungsmittels (10) direkt oder unter Zwischenschaltung von Teilen mit der zweiten Verbindungsschnittstelle (8) gekoppelt werden kann.

2. Vorrichtung (1) nach Anspruch 1, wobei die Vorrichtung (1) selektiv angeordnet werden kann in:
- einer horizontalen Position in Bezug auf eine Plattform des Transportmittels, die parallel zu dem Boden ist, auf dem sich das Transportmittel vorwärtsbewegt, im Einsatz; und in
einer in Bezug auf die horizontale Position geneigten Position, insbesondere einer vertikalen Position in Bezug auf die Plattform.

3. Vorrichtung (1) nach Anspruch 2, wobei, wenn die Vorrichtung (1) im Einsatz in der horizontalen Position in Bezug auf die Plattform angeordnet ist, das erste Gehäuse (5) mit dem zweiten Gehäuse (7) durch eine lösbare Kopplung der ersten Verbindungsschnittstelle (6) mit der zweiten Verbindungsschnittstelle (8) ohne Zwischenschaltung von Teilen direkt verbunden ist.

4. Vorrichtung (1) nach Anspruch 2, und aufweisend ein drittes Gehäuse (12), das ein Sammelmittel (11) zum Sammeln der im Einsatz durch das Konditioniermittel (3) erzeugten Kondensation beherbergt, das ein drittes Modul (M3) der Vorrichtung (1) definiert und so konfiguriert ist, dass es von einem Luftstrom in einer Zwangsbelüftung durchquert wird;
und wobei das dritte Gehäuse (12) in einer Kopplung zwischen dem ersten Gehäuse (5) und dem zweiten Gehäuse (7) zwischengeschaltet ist, wenn die Vorrichtung (1) im Einsatz in der in Bezug auf die horizontale Position geneigten Position angeordnet ist und der Luftstrom in der Zwangsbelüftung in Bezug auf eine bezüglich der Plattform horizontalen Richtung nach unten geleitet wird.

5. Vorrichtung (1) nach Anspruch 2, und aufweisend ein drittes Gehäuse (12), das ein Sammelmittel (11) zum Sammeln der im Einsatz durch das Konditioniermittel (3) erzeugten Kondensation beherbergt, das ein drittes Modul (M3) der Vorrichtung (1) definiert und so konfiguriert ist, dass es von einem Luftstrom in einer Zwangsbelüftung durchquert wird;
und wobei das dritte Gehäuse (12) stromaufwärts der ersten Einlassöffnung (5a) in Bezug auf die Richtung des Luftstroms angeordnet ist, wenn die Vorrichtung (1) im Einsatz in der in Bezug auf die horizontale Position geneigten Position angeordnet ist und der Luftstrom in der Zwangsbelüftung in Bezug auf eine bezüglich der Plattform horizontalen Richtung nach oben geleitet wird.

6. Vorrichtung (1) nach Anspruch 4 oder 5, wobei das Sammelmittel (11) zumindest zwei geneigte Sammeloberflächen (21) zum Sammeln der im Einsatz durch das Konditioniermittel (3) erzeugten Kondensation beherbergt, wobei sich die Sammeloberflächen (21) von gegenüberliegenden Innenwänden (12b) des dritten Gehäuses (12) freitragend in Richtung des Innenraums des dritten Gehäuses (12) selbst erstrecken
und wobei die Sammeloberflächen (21) innerhalb des dritten Gehäuses (12) gestaffelt angeordnet sind, so dass der Luftstrom darin einen S-förmigen Weg definiert.

7. Vorrichtung (1) nach Anspruch 6, wobei jede Sammeloberfläche durch eine Rinne (21) definiert ist, die dafür konfiguriert ist, kondensierte Feuchtigkeit vom Konditioniermittel (3) aufzunehmen, von der jeweiligen Innenwand (12b) in Richtung der gegenüberliegenden Innenwand (12b) vorragt und an ihrem freien Ende ein Bassin (22) zum Sammeln der kondensierten Feuchtigkeit aufweist, das mit einem jeweiligen Auslasskanal (23) fluidisch verbindbar ist, der dafür konfiguriert ist, die kondensierte Feuchtigkeit aus dem dritten Gehäuse (12) zu befördern.

8. Vorrichtung (1) nach einem der Ansprüche 1 bis 6, wobei das erste Gehäuse (5) eine dritte Verbindungsschnittstelle (15) aufweist, die an der ersten Einlassöffnung (5a) angeordnet ist;
wobei die Vorrichtung (1) aufweist:
- ein Zwangsbelüftungsmittel (18), das so konfiguriert ist, dass es einen Luftstrom befördert und in Richtung der ersten Einlassöffnung (5a) und durch das erste Gehäuse (5) in Richtung der ersten Auslassöffnung (5b) und dann in Richtung der zweiten Einlassöffnung (7a) leitet; und
- ein viertes Gehäuse (19), das das Zwangsbelüftungsmittel (18) beherbergt, ein viertes Modul (M4) der Vorrichtung (1) definiert und eine vierte Verbindungsschnittstelle (20) aufweist;
- wobei die dritte Verbindungsschnittstelle (15) mittels eines lösbaren Befestigungsmittels (10) direkt oder unter Zwischenschaltung von Teilen mit der vierten Verbindungsschnittstelle (20) gekoppelt werden kann.

## Revendications

1. Dispositif de conditionnement d'air (1) pour conditionner l'air présent dans un environnement intérieur (2) d'un moyen de transport, ledit dispositif (1) comprenant :
- un circuit fluidique configuré pour faire circuler un premier fluide de fonctionnement ;
- des moyens de conditionnement (3) coopérant, en cours d'utilisation, avec le circuit pour conditionner le premier fluide de fonctionnement et, par ce biais, l'air présent dans l'environnement intérieur (2) du moyen de transport ; et
- une masse de radiateur (4) configurée pour recevoir un deuxième fluide de fonctionnement et définissant une interface d'échange thermique entre le deuxième fluide de fonctionnement reçu et l'air qui longe/traverse, en cours d'utilisation, la masse de radiateur (4) ;
dans lequel le dispositif de conditionnement d'air (1) est de type modulaire et les moyens de conditionnement (3) et la masse de radiateur (4) sont logés dans des boîtiers séparés respectifs (5, 7) pouvant être reliés de manière amovible l'un à l'autre directement ou par interposition de pièces ;
dans lequel le dispositif de conditionnement d'air (1) comprend :
- un premier boîtier (5) logeant les moyens de conditionnement (3), définissant un premier module (M1) du dispositif (1), ayant une première ouverture d'entrée (5a) pour l'air à conditionner et une première ouverture de sortie (5b) pour l'air conditionné ; et
- un deuxième boîtier (7) logeant la masse de radiateur (4), définissant un deuxième module (M2) du dispositif (1), ayant une deuxième ouverture d'entrée (7a) pour l'air et une deuxième ouverture de sortie (7b) pour l'air ;
**caractérisé en ce que** le premier boîtier (5) inclut une première interface de connexion (6) disposée au niveau de la première ouverture de sortie (5b), **en ce que** le deuxième boîtier (7) inclut une deuxième interface de connexion (8) disposée au niveau de la deuxième ouverture d'entrée (7a), et **en ce que** ladite première interface de connexion (6) peut être couplée à ladite deuxième interface de connexion (8) au moyen de moyens de fixation amovibles (10), directement ou par interposition de pièces.

2. Dispositif (1) selon la revendication 1, dans lequel le dispositif (1) peut être disposé sélectivement dans :
- une position horizontale par rapport à une plate-forme du moyen de transport parallèle au sol sur laquelle le moyen de transport avance, en cours d'utilisation ; et dans
- une position inclinée par rapport à ladite position horizontale, en particulier une position verticale par rapport à ladite plate-forme.

3. Dispositif (1) selon la revendication 2, dans lequel, lorsque le dispositif (1) est disposé, en cours d'utilisation, dans ladite position horizontale par rapport à ladite plate-forme, le premier boîtier (5) est relié au deuxième boîtier (7) directement sans interposition de pièces par couplage amovible de la première interface de connexion (6) avec la deuxième interface de connexion (8).

4. Dispositif (1) selon la revendication 2, et comprenant un troisième boîtier (12) logeant des moyens de collecte (11) pour collecter la condensation produite, en cours d'utilisation, par les moyens de conditionnement (3), définissant un troisième module (M3) du dispositif (1) et configuré pour être traversé par un flux d'air en ventilation forcée ;
et dans lequel le troisième boîtier (12) est interposé en couplage entre le premier boîtier (5) et le deuxième boîtier (7) lorsque le dispositif (1) est disposé, en cours d'utilisation, dans ladite position inclinée par rapport à ladite position horizontale et que le flux d'air est dirigé, en ventilation forcée, vers le bas par rapport à une direction horizontale par rapport à ladite plate-forme.

5. Dispositif (1) selon la revendication 2, et comprenant un troisième boîtier (12) logeant des moyens de collecte (11) pour collecter la condensation produite, en cours d'utilisation, par les moyens de conditionnement (3), définissant un troisième module (M3) du dispositif (1) et configuré pour être traversé par un flux d'air en ventilation forcée ;
et dans lequel le troisième boîtier (12) est disposé en amont de la première ouverture d'entrée (5a), par rapport à la direction du flux d'air, lorsque le dispositif (1) est disposé, en cours d'utilisation, dans ladite position inclinée par rapport à ladite position horizontale et que le flux d'air est dirigé, en ventilation forcée, vers le haut par rapport à une direction horizontale par rapport à ladite plate-forme.

6. Dispositif (1) selon la revendication 4 ou 5, dans lequel lesdits moyens de collecte (11) comprennent au moins deux surfaces de collecte inclinées (21) pour collecter la condensation produite, en cours d'utilisation, par les moyens de conditionnement (3), les surfaces de collecte (21) s'étendant en porte-à-faux à partir des parois intérieures opposées (12b) du troisième boîtier (12) vers l'intérieur du troisième boîtier (12) lui-même,
et dans lequel les surfaces de collecte (21) sont disposées décalées à l'intérieur du troisième boîtier (12) de sorte que le flux d'air y définisse une trajectoire en forme de S.

7. Dispositif (1) selon la revendication 6, dans lequel chaque surface de collecte est définie par une goulotte (21) configurée pour recevoir l'humidité condensée provenant du moyen de conditionnement (3), faisant saillie de la paroi intérieure relative (12b) vers la paroi intérieure opposée (12b) et ayant, à son extrémité libre, un bassin (22) pour collecter l'humidité condensée relié fluidiquement à un conduit de sortie relatif (23) configuré pour acheminer l'humidité condensée hors du troisième boîtier (12).

8. Dispositif (1) selon l'une des revendications 1 à 6, dans lequel le premier boîtier (5) comporte une troisième interface de connexion (15) disposée au niveau de la première ouverture d'entrée (5a) ;
dans lequel le dispositif (1) comprend :
- des moyens de ventilation forcée (18) configurés pour acheminer et diriger un flux d'air vers la première ouverture d'entrée (5a) et, à travers le premier boîtier (5), vers la première ouverture de sortie (5b), puis vers la deuxième ouverture d'entrée (7a) ; et
- un quatrième boîtier (19) logeant les moyens de ventilation forcée (18), définissant un quatrième module (M4) du dispositif (1) et comportant une quatrième interface de connexion (20) ;
ladite troisième interface de connexion (15) pouvant être couplée à ladite quatrième interface de connexion (20) au moyen d'un dispositif de fixation amovible (10), directement ou par interposition de pièces.
